# EUROPÄISCHE PATENTANMELDUNG

(11) **EP 0 964 197 A2**
(43) Veröffentlichungstag der Anmeldung: **15.12.1999**
(21) Anmeldenummer: 99110473.8
(22) Anmeldetag: 31.05.1999
(51) Int. Cl.: F16L 5/06, F16L 47/00, F16L 41/00, F16L 37/00

(54) **Rohrmuffe**

(30) Priorität: 09.06.1998 DE 29810324 U
(71) Anmelder: Schütz-Werke GmbH & Co. KG., D-56242 Selters (DE)
(72) Erfinder: Schütz, Udo, 56242 Selters (DE)
(74) Vertreter: Pürckhauer, Rolf, Dipl.-Ing.

(57) **Zusammenfassung**

Die Rohrmuffe (1)zum Anschluß von Rohren wie Zulauf (3)- und Entnahmerohren an Flüssigkeitsbehälter, beispielsweise einen Wassertank (2), ist gekennzeichnet durch einen Muffenkörper (10) zum Ein- und/oder Aufstecken von zwei Rohren (3), (12), eine Klemmbefestigung (6) zum Festklemmen der Rohrmuffe (1) an dem Bereich (8) einer Behälterwand (7), der eine entsprechende Einstecköffnung (9) für die Rohrmuffe (1) in der Behälterwand (7) einfaßt, sowie eine als Dichtring (17) ausgebildete Abdichtung der Rohrmuffe (1) an und/oder in der Behälterwand (7).

## Beschreibung

Gegenstand der Erfindung ist eine Rohrmuffe zum Anschluß von Rohren wie Zulauf- und Entnahmerohren an Flüssigkeitsbehälter, mit einem Muffenkörper zum Ein- und/oder Aufstecken von zwei Rohren.

Für den Anschluß von Rohren an Kunststoffbehälter für Flüssigkeiten, beispielsweise für den Anschluß eines Zulaufrohres, eines Entnahmerohres und eines Überlaufrohres an einen Wassertank, werden an die mit Rotationssintermaschinen oder Blasformmaschinen hergestellten Behälter entsprechende Rohrstutzen angeformt. Aus fertigungstechnischen Gründen müssen diese Anschlußstutzen oft in der Trennebene der Rotationssinterform bzw. der Blasform angeordnet werden. Dieser Aufbau der Herstellungsform führt dazu, daß die Anschlußstutzen an den Kunststoffbehältern Unrundheiten und unterschiedliche Wanddicken aufweisen, so daß eine einwandfreie Abdichtung der auf die bzw. in die Anschlußstutzen auf- bzw. eingeschobenen Rohre nicht möglich ist.

Der Erfindung liegt die Aufgabe zugrunde, einen Rohranschluß mit hoher Maßhaltigkeit für Flüssigkeitsbehälter, insbesondere für Wassertanks aus Kunststoff, zu entwickeln.

Diese Aufgabe ist erfindungsgemäß gelöst durch eine Rohrmuffe mit den Merkmalen des Patentanspruches 1.

Die Unteransprüche beinhalten vorteilhafte und zweckmäßige Weiterbildungen der Erfindung.

Die Erfindung ist nachstehend anhand von Zeichnungsfiguren erläutert, die folgendes darstellen:
- Fig. 1: den Längsschnitt einer in eine Wand eines Wassertanks aus Kunststoff eingesetzten Rohrmuffe zum Anschluß eines Zulaufrohres in vergrößerter Darstellung und
- Fig. 2: den Querschnitt eines Kunststoff-Wassertanks, der mit drei Rohrmuffen zum Anschluß eines Zulaufrohrs, eines Entnahmerohrs und eines Überlaufrohrs ausgerüstet ist.

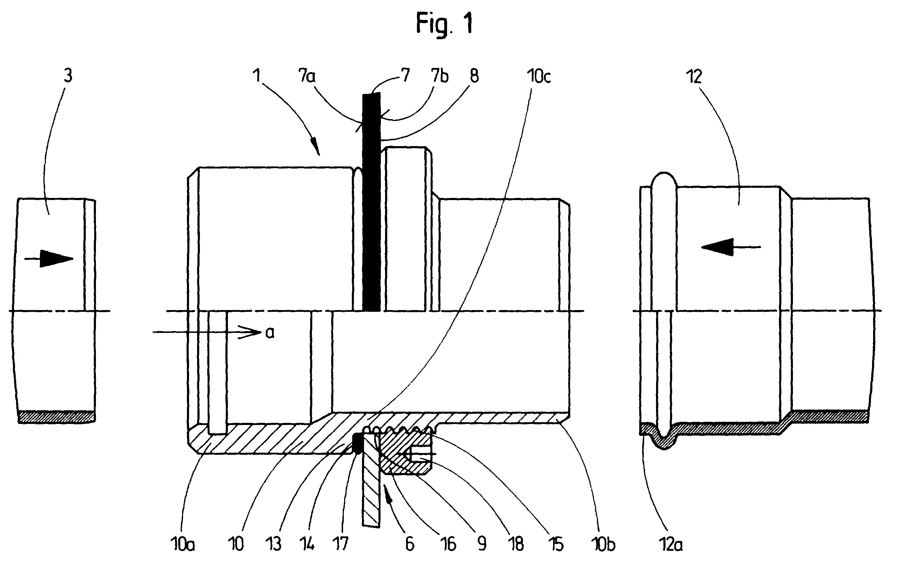

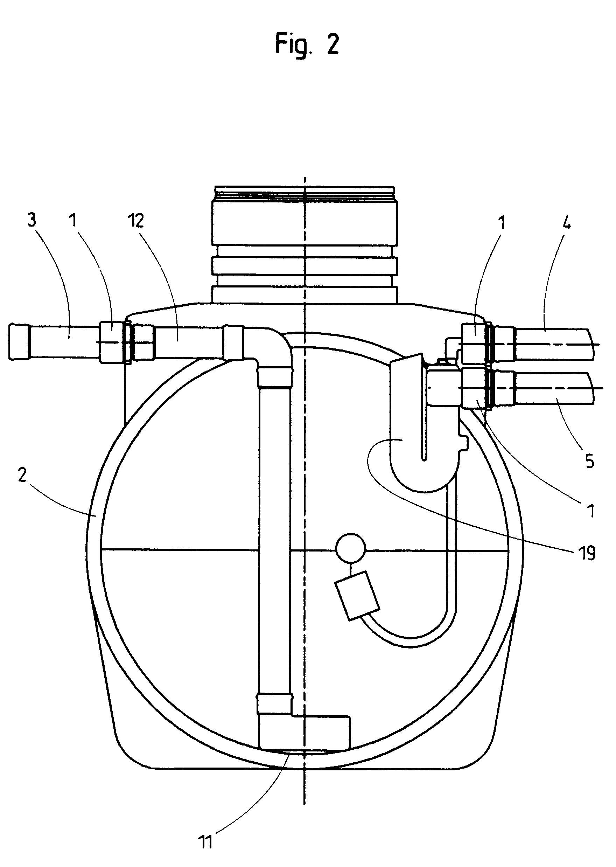

Die Rohrmuffe 1 nach Fig. 1, die als Spritzgießteil aus Kunststoff gefertigt ist und beispielsweise zum Anschluß eines Zulaufrohrs 3, eines Entnahmerohrs 4 und eines Überlaufrohrs 5 bei einem Wassertank 2 aus Kunststoff zum Auffangen von Regenwasser gemäß Fig. 2 verwendet wird, ist gekennzeichnet durch eine Klemmbefestigung 6 zum Festklammern der Muffe 1 an dem Bereich 8 der Behälterwand 7, der eine entsprechende Einstecköffnung 9 für die Rohrmuffe 1 in der Behälterwand 7 einfaßt.

Der Muffenkörper 10 besitzt ein Muffenende 10a zum Einstecken des Zulaufrohres 3 und ein Spitzende 10b zum Aufstecken eines bis zur Sohle 11 des Wassertanks 2 geführten Einlaufrohres 12. Die Rohrmuffe 1 ist derart in die Einstecköffnung 9 in der Behälterwand 7 eingesetzt, daß sich das Muffenende 10a auf der Außenseite 7a der Behälterwand 7 und das Spitzende 10b auf der Innenseite 7b der Behälterwand 7 befindet und gemäß den Normvorschriften das Zulaufrohr 3 in Fließrichtung a des Regenwassers in das Muffenende 10a der Rohrmuffe 1 und das Spitzende 10b der Rohrmuffe 10 in Fließrichtung a in das Muffenende 12a des Einlaufrohres 12 eingesteckt ist.

Der Muffenkörper 10 weist im mittleren Bereich 10c einen Kragen 13 mit einer Klemmschulter 14 auf sowie ein an den Kragen 13 anschließendes Außengewinde 15 zum Aufschrauben eines Klemmringes 16 gegen die Innenseite 7 b der Behälterwand 7 unter gleichzeitigem Verspannen des Kragens 13 gegen die Außenseite 7a der Behälterwand 7. Die Rohrmuffe 1 ist durch einen auf den Muffenkörper 10 aufgeschobenen, zwischen der Klemmschulter 14 des Kragens 13 und der Behälterwand 7 eingespannten Dichtring 17 gegen die Behälterwand 7 abgedichtet.

Der aus Kunststoff hergestellte Klemmring 16 ist mit Sackbohrungen 18 für ein Montagegerät versehen.

Für den Anschluß des Entnahmerohres 4 und des Überlaufrohres 5 mit einem Überlaufsiphon 19 an den Wassertank 2 werden die Rohrmuffen 1 in einer gegenüber der Einbaulage zum Anschluß des Zulaufrohres 3 um 180° verdrehten Einbaulage in entsprechende Einstecköffnungen 9 der Behälterwand 7 des Wassertanks 2 eingesetzt (Fig. 2).

## Patentansprüche

1. Rohrmuffe zum Anschluß von Rohren wie Zulauf- und Entnahmerohren an Flüssigkeitsbehälter, mit einem Muffenkörper zum Ein- und/oder Aufstecken von zwei Rohren, gekennzeichnet durch eine Klemmbefestigung (6) zum Festklemmen der Rohrmuffe (1) an dem Bereich (8) einer Behälterwand (7), der eine entsprechende Einstecköffnung (9) für die Rohrmuffe (1) in der Behälterwand (7) einfaßt, sowie eine Abdichtung (Dichtring 17) der Rohrmuffe (1) an und/oder in der Behälterwand (7).

2. Rohrmuffe nach Anspruch 1, dadurch gekennzeichnet, daß der Muffenkörper (10) im mittleren Bereich (10c) einen Kragen (13) mit einer Klemmschulter (14) aufweist sowie ein an den Kragen (13) anschließendes Außengewinde (15) zum Aufschrauben eines Klemmrings (16) oder einer Klemmutter gegen die eine Seite (7b) der Behälterwand (7) unter gleichzeitigem Verspannen des Kragens (13) gegen die andere Seite (7a) der Behälterwand (7).

3. Rohrmuffe nach Anspruch 1 und 2, gekennzeichnet durch ein Muffenende (10a) zum Einstecken eines Rohres (3) sowie ein Spitzende (10b) zum Aufstecken eines Rohres (12).

4. Rohrmuffe nach einem der Ansprüche 1 bis 3, dadurch gekennzeichnet, daß der Klemmring (16) mit Sackbohrungen (18) für ein Montagegerät versehen ist.

5. Rohrmuffe nach einem der Ansprüche 1 bis 4, gekennzeichnet durch eine Abdichtung derselben (1) gegen die Behälterwand (7) durch einen auf den Muffenkörper (10) aufgeschobenen, zwischen dem Kragen (13) der Rohrmuffe (1) und der Behälterwand (7) eingespannten Dichtring (17).

6. Rohrmuffe nach einem der Ansprüche 1 bis 5, dadurch gekennzeichnet, daß diese (1) aus Kunststoff hergestellt ist.

7. Rohrmuffe nach einem der Ansprüche 1 bis 5, gekennzeichnet durch eine Klemmutter (16) aus Kunststoff.
